# EUROPEAN PATENT SPECIFICATION

(11) **EP 1 872 015 B1**
(45) Date of publication and mention of the grant of the patent: **02.06.2010**
(21) Application number: 06726419.2
(22) Date of filing: 16.03.2006
(51) Int. Cl.: F04D 19/04, F04D 29/063, F04D 29/049, F16C 33/66

(54) **VACUUM PUMP**
VAKUUMPUMPE
POMPE A VIDE

(30) Priority: 20.04.2005 GB 0508013
(43) Date of publication of application: 02.01.2008
(73) Proprietor: Edwards Limited, Crawley, West Sussex RH10 9LW (GB)
(72) Inventor: WAYE, Andrew, BOC Edwards, West Sussex RH15 9TT (GB)
(74) Representative: Clark, Charles Robert
(86) International application number: PCT/GB2006/000973
(87) International publication number: WO 2006/111695

(56) References cited:
- EP-A- 0 342 515
- EP-A- 0 348 931
- EP-A- 0 589 362
- DE-U1- 8 909 636
- FR-A- 2 461 134

## Description

This invention relates to a vacuum pump, and in particular to the lubrication of rolling bearings used to support the impeller of a vacuum pump.

Vacuum pumps typically comprise an impeller in the form of a rotor mounted on a shaft for rotation relative to a surrounding stator. The shaft is supported by a bearing arrangement comprising two bearings located at or intermediate respective ends of the shaft. One or both of these bearings may be in the form of rolling bearings. Usually, the upper bearing is in the form of a magnetic bearing, and the lower bearing is in the form of a rolling bearing.

A typical rolling bearing comprises an inner race fixed relative to the shaft, an outer race, and, located between the races, a plurality of rolling elements for allowing relative rotation of the inner race and the outer race. To prevent mutual contacts between the rolling elements, they are often guided and evenly spaced by a cage. Adequate lubrication is essential to ensure accurate and reliable operations of rolling bearings. The main purpose of the lubricant is to establish a load-carrying film separating the bearing components in rolling and sliding contact in order to minimize friction and wear. Other purposes include the prevention of oxidation or corrosion of the bearing components, the formation of a barrier to contaminants, and the transfer of heat away from the bearing components. The lubricant is generally in the form of either oil or grease (a mixture of oil and a thickening agent).

Vacuum pumps using oil-lubricated bearings require an oil feeding system for feeding oil between the contact areas of the bearing, which enables the oil to perform cooling as well as lubrication and thereby permit the bearings to run at a faster speed. Turbo-molecular pumps have traditionally used a wicking system for supplying oil to a rolling bearing. In such a system, a felt wick partially submerged in an oil reservoir feeds oil to a conical "oil feed" nut mounted on the shaft. With rotation of the pump, oil travels along the conical surface of the nut to the bearing. The oil passes through the bearing and is returned to the reservoir.

The feed rate of oil to the bearing is determined by a number of factors, including the taper angle of the nut, the rate of transfer of oil from the wick to the nut, the surface finish of the conical surface of the nut, temperature, and the speed of rotation of the shaft. Consequently, the degree of control over the oil feed rate is relatively poor. Where the bearing does not use a cage, the oil delivery system can only deliver oil to the outer race, and so the system is reliant on the rolling elements to transfer oil from the outer race to the inner race, which may provide insufficient lubrication of the inner race. As rotation of the shaft is required to transfer oil from the reservoir to the bearing, there is a possibility that the bearings may be inadequately lubricated during the initial period of pump use, which may be as long as 4 to 6 hours for some pumps. This type of oil delivery system also restricts the orientation of the pump during use. Oil can also be delivered to the bearings via a pump driven by a motor, such as described in EP 0 342 515 A, which is considered to be the closest prior art for the present invention.

Grease-lubricated bearings can afford a number of advantages over oil-lubricated bearings. The main advantage is that the bearing can be pre-lubricated with grease, eliminating the need for an oil delivery system to replenish lubricant during use. Consequently, the pump can be used in any orientation. However, as the oil in the grease is not replaced during the life of the bearing, the life expectancy of a grease-lubricated bearing is lower than that of an oil-lubricated bearing. In addition, the diverse operating conditions experienced during operation of the pump (variations in speed, load and temperature) can reduce further the life expectancy of grease-lubricated bearings.

Whilst the use of magnetic bearings is able to overcome the problems associated with lubricated bearings, the cost of magnetic bearings, together with the cost of associated sensors and complex control circuitry, makes the use of such bearings relatively expensive.

It is an aim of at least the preferred embodiment of the present invention to provide a vacuum pump having an improved system for supplying lubricant to a bearing.

In a first aspect, the present invention provides a vacuum pump comprising a housing, a rotor supported by a bearing arrangement for rotation relative to the housing, a droplet ejection unit for ejecting droplets of lubricant towards a rolling bearing of the bearing arrangement, the ejection unit comprising a lubricant chamber, a nozzle in fluid communication with the chamber, and an electrically actuable actuator, and a controller for applying electrical signals to the actuator to effect ejection of droplets of lubricant from the chamber through the nozzle on to the bearing, and characterised in that the actuator of said vacuum pump is adapted to vary the volume of the chamber, thereby to effect droplet ejection therefrom.

The droplet ejection unit can thus provide a controlled delivery of lubricant directly to the critical parts of a bearing. The ejection unit can be controlled independently of pump operation and shaft rotation speed by the application of a voltage to the actuator to effect droplet ejection. Lubricant can thus be delivered to the bearing at any preferred rate and on any basis/duty cycle.

For example, ideal bearing lubrication relies on a specific rate of lubricant feed. For systems where minimal feed is required (e.g. for reasons such as power consumption) benefit could be gained from the use of a lubrication system in which the rate of lubricant feed to the bearing can be adjusted to suit particular operating conditions. Of equal benefit, the lubrication feed rate need not be continuous and a simple lubrication duty cycle could be based on time. For more complex systems a feedback loop could be introduced to provide a lubrication duty cycle based on other requirements such as operating condition of the pump (e.g. bearing temperature and/or load). The technology may be used under vacuum.

The actuator can be positioned to provide the lubricant directly to the required surfaces within the bearing, such as the inner or outer race, cage or rolling elements. This direct injection of lubricant to the point of use offers the advantage of requiring a much lower total lubricant load into the bearing than conventional methods of lubrication, offering potential advantages in terms of lubricant life, bearing reliability, power and temperature. Many traditional oil-felt fed bearings have cages and rely on these to transfer oil to the rolling elements and hence to the inner race. The lubrication system of the present invention would eliminate the need for a cage for this purpose. Cage-less bearings have potentially greater load capacity and no danger of cage-generated debris.

By combining the advantages of reduced/controlled oil feed rate noted above with specific design features for inverted operation, it may be possible to design a long life, oil-lubricated inverted pump and bearing arrangement. The opportunity for reducing oil feed rate to the bearings is significant. Recent tests have demonstrated that a pump can operate for over 2 months with only a very small oil charge within the bearing, and with no replenishment. If the droplet ejection unit is connected to a sealed lubricant reservoir of similar capacity to a standard felt oil charge (~10ml), the ejection unit can supply lubricant to the critical elements of the bearing at a vastly reduced rate in comparison to a standard uncontrolled method such as felt lubrication. The reduction in oil feed rate could potentially be so significant that the entire oil charge in the reservoir may be sufficient to maintain adequate lubrication to the bearing for its lifetime/service interval without any recirculation of the oil necessary.

For inverted pumps, the majority of the lubricant in the bearing will eventually drain to the remote (pump) side of the bearing over time due to gravity. In order to prevent the lubricant from reaching the pumping mechanism, a capillary-based 'catch-pot' technique (such as felts or a sintered block) or other suitable means may be provided to retain the 'used' oil on the remote side of the bearing. This catch-pot would require replacing at the time of service. Alternatively, a reservoir could be positioned on the remote side of the bearing. Thus, this invention can offer the low cost, extended life capability of oil-lubricated and grease-lubricated bearings when combined with inverted operation.

In the preferred embodiment, the actuator is actuable a plurality of times in accordance with the electrical signals thereby to eject a corresponding number of droplets of lubricant. The actuator is preferably adapted to vary the volume of the chamber, thereby to effect droplet ejection therefrom. The actuator may be resiliently deformable upon the application of an electrical signal thereto to eject lubricant from the chamber.

In the preferred embodiment, the actuator is a piezoelectric actuator, although other forms of actuator, such as a magneto-restrictive actuator, may be used. The actuator may comprise at least part of a piezoelectric wall bounding the chamber, or it may be attached to a deflectable wall bounding the chamber.

The controller may be integral with the pump control circuit. Integration of the controller within the pump control circuit would allow a 'pump run' command to result in a short period of 'oil priming' of the bearing prior to the onset of shaft rotation. The duty cycle and feed rate may also be governed differently during the initial running to that supplied during continuous use to accommodate cyclic specific characteristics such as differing bearing loads, evacuation of the bearing cavity causing potential 'drying' of the bearings etc. The controller may be configured to vary the rate at which electrical signals are applied to the actuator to vary the rate of droplet ejection from the ejection unit. The controller may also be configured to adjust the waveform of the electrical signals applied to the actuator, for example, in dependence upon at least one operating parameter of the pump, such as the pressure within the pump, so that the droplets of lubricant ejected from the nozzle land on the intended part of the bearing.

In a second aspect, the present invention provides a method of lubricating a rolling bearing of a vacuum pump, the method comprising the steps of providing a droplet ejection unit for ejecting droplets of lubricant towards the bearing, the ejection unit comprising a lubricant chamber, a nozzle in fluid communication with the chamber, and an electrically actuable actuator, supplying lubricant to the chamber, and applying electrical signals to the actuator to effect ejection of droplets of lubricant from the chamber through the nozzle on to the bearing, and characterised in that the volume of the chamber is varied to effect droplet ejection therefrom.

Features described above in relation to a pump aspect of the invention are equally applicable to the method aspect of the invention, and vice versa.

Preferred features of the present invention will now be described, by way of example only, with reference to the accompanying drawings, in which:
Figure 1 illustrates a cross-sectional view through a turbomolecular vacuum pump;
Figure 2 illustrates in more detail a system for supplying lubricant to the rolling bearing of the pump of Figure 1;
Figure 3(a) is a sectional plan view of the ejection mechanism of the ejection unit of Figure 2;
Figure 3(b) is a cross-sectional view of the mechanism of Figure 3(a) taken on the line A-A;
Figure 3(c) is a view similar to Figure 3(b), showing the mechanism when a voltage is applied thereto;
Figure 4 illustrates schematically one embodiment of the system for supplying lubricant to the rolling bearing;
Figure 5 illustrates schematically a second embodiment of the system for supplying lubricant to the rolling bearing;
Figure 6 illustrates schematically a third embodiment of the system for supplying lubricant to the rolling bearing; and
Figure 7 illustrates schematically a fourth embodiment of the system for supplying lubricant to the rolling bearing.

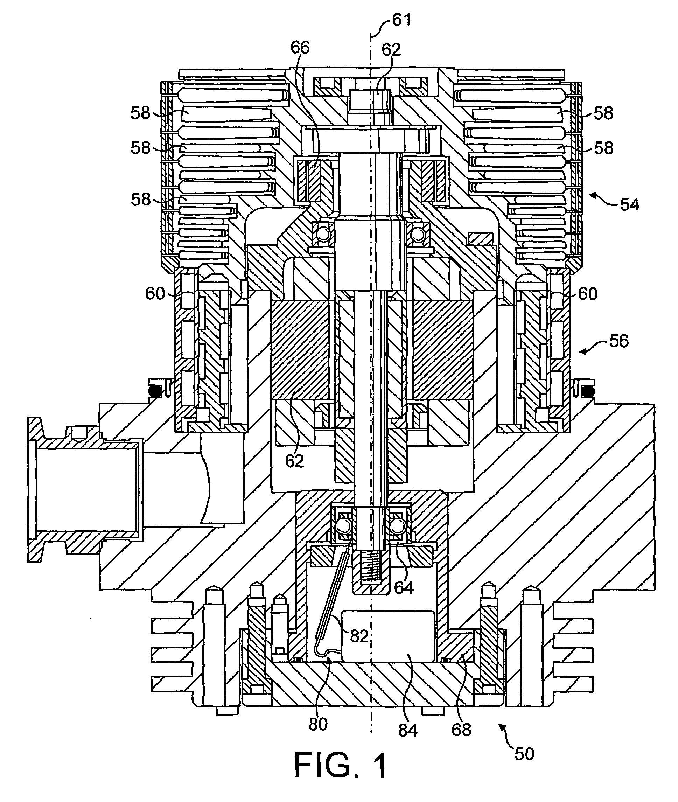

Figure 1 shows a cross-section of a vacuum pump 50 comprising a pumping arrangement driven by a shaft 52. The illustrated vacuum pump is a turbomolecular vacuum pump comprising a turbomolecular pumping mechanism 54 and a molecular drag pumping mechanism 56. The turbomolecular pumping mechanism comprises a plurality of rotor blades 58 mounted on, or integral with, the shaft 52. The molecular drag pumping mechanism 56 is in the form of a Holweck pumping mechanism, and comprises one more cylinders 60 mounted on the shaft 52. The shaft is rotated about longitudinal axis 61 by a motor 62 to drive the pumping arrangement.

The shaft 52 is supported by a bearing arrangement comprising two bearings which may be positioned either at respective ends of the shaft as shown or alternatively intermediate the ends. In Figure 1, a rolling bearing 64 supports a first portion of the shaft 52 and a magnetic bearing 66 supports a second portion of the shaft 52. A second rolling bearing may be used as an alternative to the magnetic bearing 66. When a magnetic bearing is used, it may also be desirable to incorporate a back-up bearing.

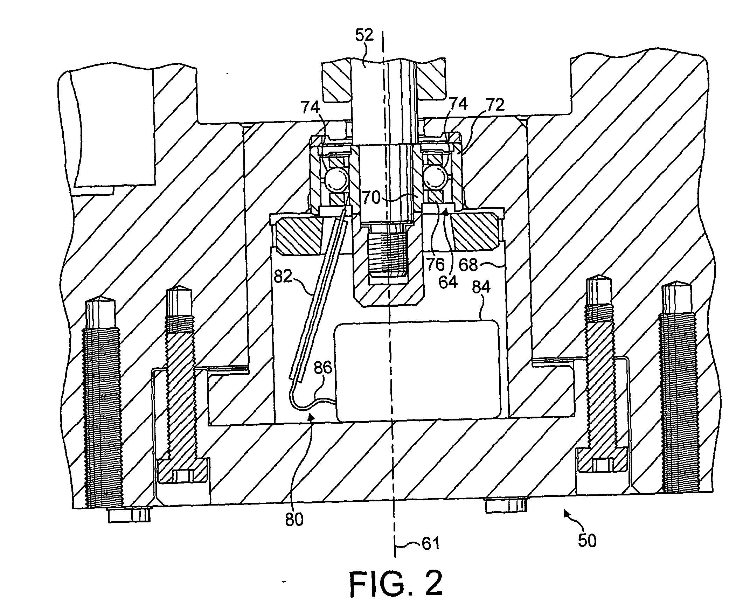

With reference also to Figure 2, the rolling bearing 64 is provided between the second end portion of the shaft 52 and a housing portion 68 of the pump 50. The rolling bearing 64 comprises an inner race 70 fixed relative to the shaft 52, an outer race 72, and a plurality of rolling elements 74, supported by a cage 76, for allowing relative rotation of the inner race 70 and the outer race 72.

The rolling bearing 64 is lubricated by a lubricant supply system 80 to establish a load-carrying film separating the bearing components in rolling and sliding contact in order to minimize friction and wear. The lubricant supply system 80 comprises a droplet ejection unit 82 located proximate the rolling bearing 64 for ejecting droplets of lubricant, preferably a degassed, oil-based lubricant, towards the rolling bearing 64, and a lubricant supply 84 for supplying lubricant to the ejection unit 82. In this embodiment, the lubricant supply 84 is in the form of an oil reservoir located remote from the ejection unit 82 and connected to the ejection unit by a conduit 86 for supplying oil-based lubricant to the ejection unit 82. Alternatively, the lubricant supply 84 may be integral with the ejection unit 82.

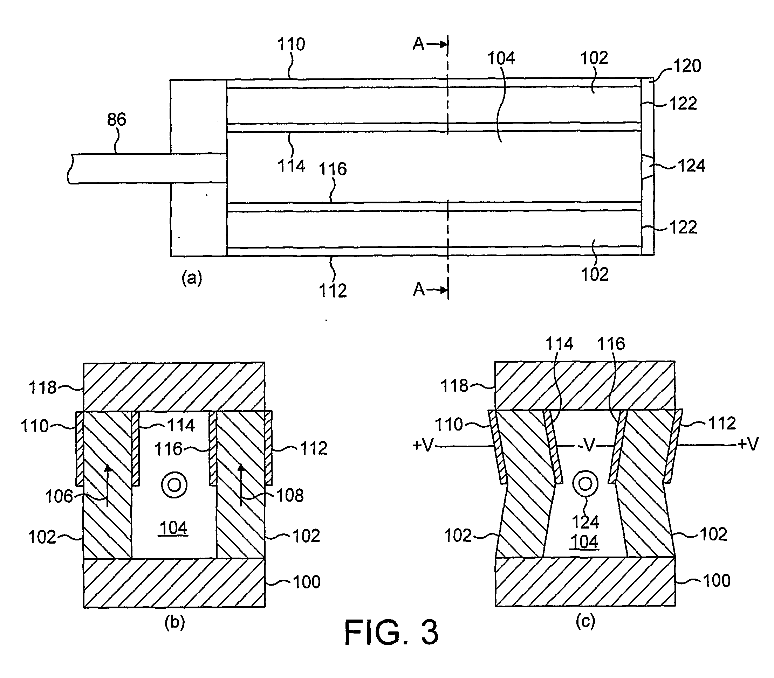

With reference to Figures 3(a), 3(b) and 3(c), the ejection unit 82 comprises a base 100 and walls 102 extending from the base 100 to define a lubricant chamber or channel 104 between the base 100 and the walls 102. The walls 102 may be integral with the base 100, the channel 104 being formed by machining a groove in the base 100 to define the walls 102. Alternatively, the walls 102 may be mounted on the base 100.

The walls 102 serve as actuators for ejecting lubricant from the channel 104. Each wall 102 is formed from piezoelectric ceramic material, such as lead zirconium titanate (PZT). Each wall is poled in the direction indicated by the arrows 106 and 108 in Figure 3(b). Electrode material is deposited over the side surfaces of the walls 102 using any suitable technique to define first electrodes 110, 112 for receiving electrical signals of potential +V from a controller for actuating the walls 102, and second electrodes 114, 116, which may be at ground or, as illustrated in Fig 3(c) arranged to receive electrical signals of reverse polarity -V from the controller for actuating the walls. Alternatively, the first and second electrodes may be arranged to receive electrical signals of ±V/2 to enable the walls to be deflected outwardly and/or inwardly as required. The tops of the walls 102 are kept free of electrode material, for example, by masking or by subsequently grinding down the tops of the walls 102, so that the first electrodes 110, 112 are isolated from the second electrodes 114, 116. Following deposition, the electrodes 114, 116 are coated with an inorganic or organic passivant layer, which acts as an ionic and electron barrier for electrical isolation of the electrodes from lubricant within the channel 104.

A cover 118 is mounted on the upper surfaces of the walls 102 to close the channel 104. Conduit 86 is connected to the rear of the channel 104 to supply lubricant to the channel 104. A nozzle plate 120 is bonded to the end surfaces 122 of the walls 102. The nozzle plate 120 typically consists of a strip of polymer, such as polyimide, coated with a non-wetting coating. A nozzle 124 is formed in the nozzle plate, for example by UV excimer laser ablation.

The ejection unit 82 ejects droplets of lubricant from the nozzle 124 in response to the potential differences established across the walls 102 by the voltage pulses supplied to the electrodes. These potential differences establish electric fields in the walls 102, which develop shear distortion in the piezoelectric material of the walls 102 and cause the walls 102 to deflect inwardly, as illustrated in Figure 3(c), into the channel 104. This displacement generates an acoustic pressure wave in the lubricant present in the channel 104, which travels the length of the channel to dissipate the energy stored in the lubricant and the walls 102. The volume strain or condensation as the pressure wave recedes from the nozzle 124 develops a flow of lubricant from the nozzle for a period of time, causing a droplet of lubricant to be ejected from the nozzle 124. The size of the pressure generated in the channel 104, and also the volume of the droplet ejected from the nozzle 124, are dependent, at least in part, on the dimensions of the channel 104 and the walls 102, the stiffness of the walls 102, the waveform of the voltage pulses V and the viscosity of the lubricant. Subsequently, as the pressure wave is damped, lubricant ejected from the channel is replenished by lubricant from the lubricant supply 84 to enable droplet ejection to be repeated.

Returning to Figure 2, the ejection unit 82 is arranged such that droplets are ejected from the nozzle 124 towards the rolling bearing 64, and preferably such that the droplets impinge upon a particular part of the rolling bearing 64. In the arrangement shown in Figure 2, the droplets are ejected from the nozzle 124 so that they land upon the inner race 70. However, the ejection unit 82 may be arranged so that the droplets land upon the rolling elements 74, outer race 72, cage 76 or any other part of the rolling bearing 64. If so desired, means may be provided for moving the ejection unit 82 relative to the rolling bearing so as to direct the droplets ejected from the ejection unit 82 towards a different part of the rolling bearing 64.

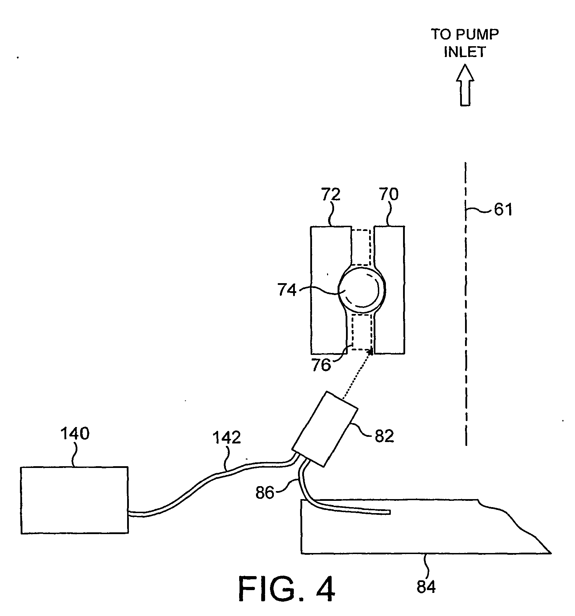

Figure 4 highlights features of the rolling bearing 64 and the lubricant supply system 80. As the cage 76 of the rolling bearing 74 is now an optional feature, as there is now no requirement for the presence of a cage to transfer lubricant to the inner race 70 and rolling elements 74, this feature of the bearing 64 has been illustrated using dashed lines. Figure 4 also illustrates a controller 140 for supplying the voltage pulses to the electrodes of the ejection unit 82. In Figure 4, the controller 140 is located remote from the ejection unit 82, and is connected to the electrodes via electrical conductor 142. The controller 140 may be remote from, or integral with, a pump control circuit for controlling the motor 62 of the pump 50. Alternatively, the controller 140 may be integral with the ejection unit 82, and may be configured to receive signals from the pump control circuit for controlling the supply of voltage pulses to the electrodes. The controller 140 may be configured to adjust the voltage V, rate at which the voltage pulses are supplied to the ejection unit, and/or the waveform of these pulses, in response to the signals received from the pump control circuit. This can enable the supply of lubricant to the rolling bearing to be controlled in dependence on one or more operational parameters of the pump, such as the pressure within the pump, bearing temperature, bearing load and the rotational speed of the shaft 52. Alternatively, a relatively simple lubrication duty cycle may be based on time.

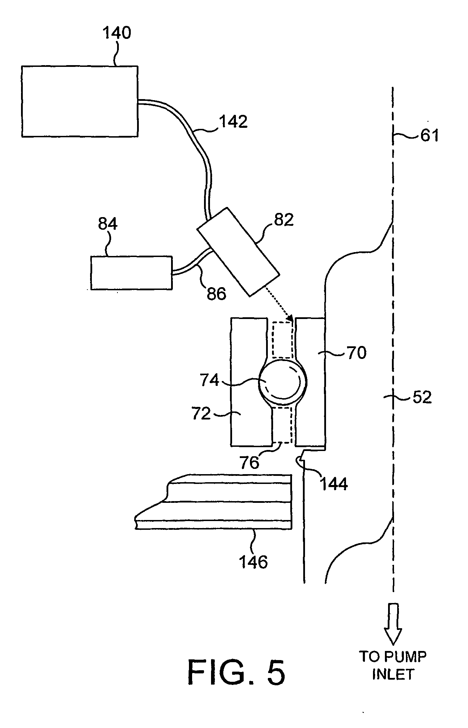

When the vacuum pump 50 is oriented as shown in Figures 1 and 4, that is, with the gas inlet 88 of the vacuum pump 50 located above the gas outlet 90 from the vacuum pump 50, and with the longitudinal axis 61 extending substantially vertically, any oil discharged from the bearing 64 falls back towards the lubricant supply 84, that is, away from the pumping mechanisms 54, 56 of the vacuum pump 50. However, when the vacuum pump is inverted through 180°, that is, with the gas inlet 88 now located below the gas outlet 90 and with the longitudinal axis 61 extending substantially vertically, there is a possibility that any oil discharged from the rolling bearing 64 during use of the vacuum pump 50 may migrate towards the pumping mechanisms 54, 56. In view of this, as illustrated in Figure 5, when the pump 50 is to be used in an inverted orientation the shaft 52 may be formed or otherwise provided with a finger 144 for directing any oil migrating downwards (as illustrated) along the outer surface of the shaft into a capillary-type catch pot 146 formed from felts or a sintered block for retaining the oil. This catch pot 146 can then be replaced during routine servicing of the pump 50, or during replenishment or replacement of the lubricant supply 84. Consequently, the lubricant supply system 80 may be used for the in situ replenishment of oil within oil-lubricated and grease-lubricated bearings in a vacuum pump arranged in any orientation.

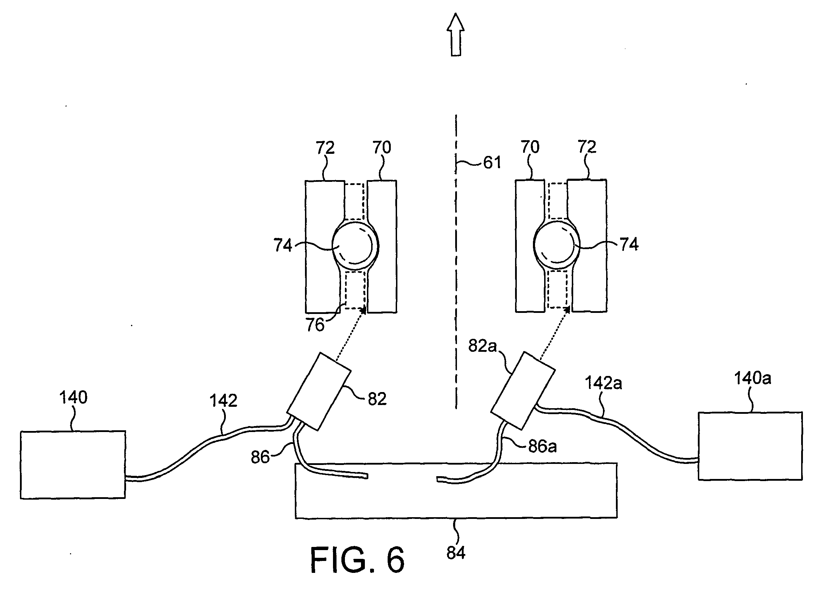

In the embodiments described above, the vacuum pump 50 includes a single ejection unit 82 having a single channel 104 for receiving lubricant from the lubricant supply 84 and a single nozzle 124 from which droplets are ejected towards a particular part of the rolling bearing 64. In the third embodiment illustrated in Figure 6, the vacuum pump 50 includes a plurality of ejection units 82, 82a (two shown in Figure 6, although any suitable number may be provided) each for ejecting lubricant towards a respective part of the rolling bearing 64. As illustrated, the ejection units 82, 82a may share a common lubricant supply 84, or a separate lubricant supply may be provided for each ejection unit 84. The ejection units may each have a respective controller 140, 140a; alternatively a single controller may control the ejection of droplets from each of the ejection units.

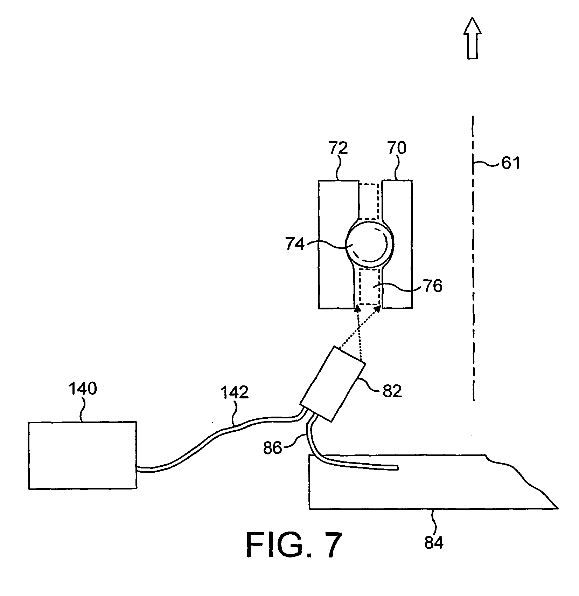

In the fourth embodiment illustrated in Figure 7, the ejection unit 82 comprises a plurality of lubricant chambers 104 formed by machining a plurality of grooves in the base 100 to define walls for each of the chambers. Droplets of lubricant are ejected from each of the chambers through respective nozzles formed in the nozzle plate towards a respective part of the rolling bearing 64. The direction in which the droplets are ejected from each chamber may be determined by the inclination of the respective nozzle formed in the nozzle plate, or by the angle at which the chamber is formed in the base 100.

## Claims

1. A vacuum pump (50) comprising a housing, a rotor supported by a bearing arrangement for rotation relative to the housing, a droplet ejection unit (82) for ejecting droplets of lubricant towards a rolling bearing (64) of the bearing arrangement, the ejection unit (82) comprising a lubricant chamber (104), a nozzle (124) in fluid communication with the chamber (104), an electrically actuable actuator(102) , and a controller (140) for applying electrical signals to the actuator (102) to effect ejection of droplets of lubricant from the chamber (104) through the nozzle (124) on to the bearing (64); **characterised in that** the actuator (102) of said vacuum pump (50) is adapted to vary the volume of the chamber (104), thereby to effect droplet ejection therefrom.

2. A vacuum pump according to Claim 1, wherein the actuator (102) is actuable a plurality of times in accordance with the electrical signals thereby to eject a corresponding number of droplets of lubricant.

3. A vacuum pump according to any preceding claim, wherein the actuator (102) is resiliently deformable upon the application of an electrical signal thereto to eject lubricant from the chamber (104).

4. A vacuum pump according to Claim 3, wherein the actuator (102) is a piezoelectric actuator.

5. A vacuum pump according to Claim 4, wherein the piezoelectric actuator (104) comprises art least part of a piezoelectric wall bounding the chamber (104).

6. A vacuum pump according to Claim 5, wherein the chamber (104) is of rectangular cross-section having opposed top and base walls (100) and opposed side walls (102), one of the side walls providing the piezoelectric wall.

7. A vacuum pump according to any preceding claim, wherein the controller is configured to vary the rate at which electrical signals are applied to the actuator (102) to vary the rate of droplet ejection from the ejection unit (82).

8. A vacuum pump according to any preceding claim, wherein the controller (140) is configured to adjust the waveform of the electrical signals applied to the actuator.

9. A vacuum pump according to Claim 8, wherein the controller (140) is configured to adjust the waveform of the electrical signals applied to the actuator (102) in dependence upon at least one operating parameter of the pump (50).

10. A vacuum pump according to any preceding claim, wherein the controller is configured to adjust the magnitude and/or duration of the electrical signals applied to the actuator.

11. A vacuum pump according to any preceding claim, comprising a lubricant supply (84) for supplying lubricant to the chamber (104) for replenishment of droplets ejected from the chamber (104).

12. A vacuum pump according to Claim 11, wherein the lubricant supply (84) is configured to collect lubricant discharged from the bearing (64).

13. A vacuum pump according to any preceding claim, comprising means for preventing lubricant discharged from the bearing (64) from migrating to a pumping mechanism of the vacuum pump.

14. A vacuum pump according to any preceding claim, wherein the ejection unit (82) comprises a plurality of lubricant chambers (104) and, for each chamber (104), a nozzle (124) in fluid communication with that chamber (104) and an electrically actuable actuator (102), the controller (140) being configured to apply electrical signals to the actuators (102) to effect ejection of droplets of lubricant from the chambers (104) through the nozzles (124).

15. A vacuum pump according to any preceding claim, comprising a plurality of said ejection units (82) each for ejecting droplets of lubricant towards the bearing (64).

16. A vacuum pump according to any preceding claim, in the form of a turbomolecular vacuum pump (50).

17. A method of lubricating a rolling bearing (64) of a vacuum pump (50), the method comprising the steps of providing a droplet ejection unit (82) for ejecting droplets of lubricant towards the bearing (64), the ejection unit (82) comprising a lubricant chamber (104), a nozzle (124) in fluid communication with the chamber (104), and an electrically actuable actuator (102), supplying lubricant to the chamber (104), and applying electrical signals to the actuator (102) to effect ejection of droplets of lubricant from the chamber (104) through the nozzle (124) on to the bearing (64), and **characterised in that** the volume of the chamber (104) is varied to effect droplet ejection therefrom.

18. A method according to Claim 17, wherein the actuator (102) is actuated a plurality of times in accordance with the electrical signals to eject a corresponding number of droplets of lubricant.

19. A method according to any of Claims 17 to 18, wherein the actuator (102) is deformed upon the application of an electrical signal thereto to eject lubricant from the chamber (104).

20. A method according to Claim 19, wherein the actuator (102) is a piezoelectric actuator (102).

21. A method according to Claim 20, wherein the piezoelectric actuator (102) comprises at least part of a piezoelectric wall (110, 114, 116, 112)) bounding the chamber (104).

22. A method according to Claim 21, wherein the chamber (104) is of rectangular cross-section having opposed top and base walls (100, 118) and opposed side walls (102), one of the side walls (102) providing the piezoelectric wall.

23. A method according to any of Claims 17 to 22, wherein the rate at which electrical signals are applied to the actuator (102) is varied to vary the rate of droplet ejection from the ejection unit (82).

## Patentansprüche

1. Vakuumpumpe (50) mit einem Gehäuse, einem von einer Lageranordnung relativ zum Gehäuse drehbar abgestützten Rotor, einer Tropfenauswurfeinheit (82) zum Auswerfen von Schmiermitteltropfen gegen ein Wälzlager (64) der Lageranordnung, wobei die Auswurfeinheit (82) eine Schmiermittelkammer (104), eine Düse (24), die in Strömungsverbindung mit der Kammer (104) steht, ein elektrisch betätigbares Betätigungsorgan (102), und eine Steuerung (140) zum Anlegen elektrischer Signale an das Betätigungsorgan (102) zum Bewirken des Auswerfens von Schmiermitteltropfen aus der Kammer (104) durch die Düse (124) gegen das Lager (64) umfaßt, **dadurch gekennzeichnet, dass** das Betätigungsorgan (102) der genannten Vakuumpumpe (50) für das Variieren des Kammervolumens (104) ausgelegt ist, um **dadurch** das Auswerfens von Tropfen daraus zu bewirken.

2. Vakuumpumpe nach Anspruch 1, wobei das Betätigungsorgan (102) eine Mehrzahl von Malen gemäß den elektrischen Signalen betätigbar ist, um eine entsprechende Anzahl von Schmiermitteltropfen auszuwerfen.

3. Vakuumpumpe nach irgend einem vorhergehenden Anspruch, wobei das Betätigungsorgan (102) beim Anlegen eines elektrischen Signals elastisch verformbar ist, um Schmiermittel aus der Kammer (104) auszuwerfen.

4. Vakuumpumpe nach Anspruch 3, wobei das Betätigungsorgan (102) ein piezoelektrisches Betätigungsorgan ist.

5. Vakuumpumpe nach Anspruch 4, wobei das piezoelektrische Betätigungsorgan (104) mindestens einen Teil einer an die Kammer (104) angrenzenden piezoelektrischen Wand aufweist.

6. Vakuumpumpe nach Anspruch 5, wobei die Kammer (104) einen rechteckigen Querschnitt mit entgegengesetzten Deck- und Bodenwänden (100) und entgegengesetzten Seitenwänden (102) aufweist, wobei eine der Seitenwände die piezoelektrische Wand bildet.

7. Vakuumpumpe nach irgend einem vorhergehenden Anspruch, wobei die Steuerung so konfiguriert ist, dass sie die Rate verändert, mit welcher elektrische Signale zum Betätigungsorgan (102) zugeführt werden, um die Rate des Tropfenauswurfs aus der Auswurfeinheit (82) zu variieren.

8. Vakuumpumpe nach irgend einem vorhergehenden Anspruch, wobei die Steuerung (140) so konfiguriert ist, dass sie die Wellenform der an das Betätigungsorgan angelegten elektrischen Signale einstellt.

9. Vakuumpumpe nach Anspruch 8, wobei die Steuerung (140) so konfiguriert ist, dass sie die Wellenform der an das Betätigungsorgan (102) angelegten elektrischen Signale in Abhängigkeit von mindestens einem Betriebsparameter der Pumpe (50) einstellt.

10. Vakuumpumpe nach irgend einem vorhergehenden Anspruch, wobei die Steuerung so konfiguriert ist, dass sie die Größe und/oder Dauer der an das Betätigungsorgan angelegten elektrischen Signale einstellt.

11. Vakuumpumpe nach irgend einem vorhergehenden Anspruch, mit einer Schmiermittelzufuhr (84) zum Zuführen von Schmiermittel zu der Kammer (104) zum Auffüllen von aus der Kammer (104) ausgeworfener Tropfen.

12. Vakuumpumpe nach Anspruch 11, wobei die Schmiermittelzufuhr (84) so konfiguriert ist, dass sie aus dem Lager (64) ausgetretenes Schmiermittel sammelt.

13. Vakuumpumpe nach irgend einem vorhergehenden Anspruch, mit Mitteln zum Verhindern, dass aus dem Lager (64) austretendes Schmiermittel zu einem Pumpenmechanismus der Vakuumpumpe wandert.

14. Vakuumpumpe nach irgend einem vorhergehenden Anspruch, wobei die Auswurfeinheit (82) eine Mehrzahl von Schmiermittelkammern (104) und für jede Kammer (104) eine Düse (124) in Strömungsverbindung mit dieser Kammer (104) und ein elektrisch betätigbares Betätigungsorgan (102) aufweist, wobei die Steuerung (140) so konfiguriert ist, dass sie elektrische Signale an die Betätigungsorgane (102) zum Bewirken des Auswurfs von Schmiermitteltropfen aus den Kammern (104) durch die Düsen (124) anlegt.

15. Vakuumpumpe nach irgend einem vorhergehenden Anspruch, mit einer Mehrzahl der genannten Auswurfeinheiten (82) jeweils zum Auswerfen von Schmiermitteltropfen zu dem Lager (64) hin.

16. Vakuumpumpe nach irgend einem vorhergehenden Anspruch in Form einer Turbomolekular-Vakuumpumpe (50).

17. Verfahren zum Schmieren eines Wälzlagers (64) einer Vakuumpumpe (50), wobei das Verfahren die Schritte des Bereitstellens einer Tropfenauswurfeinheit (82) zum Auswerfen von Schmiermitteltropfen gegen das Lager (64), wobei die Auswurfeinheit (82) eine Schmiermittelkammer (104), eine Düse (124) in Strömungsverbindung mit der Kammer (104), und ein elektrisch betätigbares Betätigungsorgan (102) aufweist, des Zuführens von Schmiermittel zu der Kammer (104), und des Anlegens elektrischer Signale an das Betätigungsorgan (102) zum Bewirken des Auswurfs von Schmiermitteltropfen aus der Kammer (104) durch die Düse (124) gegen das Lager (64) umfasst, und **dadurch gekennzeichnet, dass** das Volumen der Kammer (104) zum Bewirken des Tropfenauswurfs aus derselben variiert wird.

18. Verfahren nach Anspruch 17, wobei das Betätigungsorgan (102) eine Mehrzahl von Malen entsprechend der elektrischen Signale betätigt wird, um eine entsprechende Anzahl von Schmiermitteltropfen auszuwerfen.

19. Verfahren nach einem der Ansprüche 17 bis 18, wobei das Betätigungsorgan (102) beim Anlegen eines elektrischen Signals daran verformt wird, um Schmiermittel aus der Kammer (104) auszuwerfen.

20. Verfahren nach Anspruch 19, wobei das Betätigungsorgan (102) ein piezoelektrisches Betätigungsorgan (102) ist.

21. Verfahren nach Anspruch 20, wobei das piezoelektrische Betätigungsorgan (102) mindestens einen Teil einer piezoelektrischen Wand (110, 114, 116, 112) aufweist, welche die Kammer (104) begrenzt.

22. Verfahren nach Anspruch 21, wobei die Kammer (104) einen rechteckigen Querschnitt mit gegenüberliegenden Deck- und Bodenwänden (100, 118) und gegenüberliegenden Seitenwänden (102) aufweist, wobei eine der Seitenwände (104) die piezoelektrische Wand bildet.

23. Verfahren nach einem der Ansprüche 17 bis 22, wobei die Rate, mit welcher elektrische Signale an das Betätigungsorgan (102) angelegt werden, variiert wird, um die Rate des Tropfenauswurfs aus der Auswurfeinheit (82) zu variieren.

## Revendications

1. Pompe à vide (50) comprenant un carter, un rotor supporté par un système de palier pour une rotation par rapport au carter, une unité d'éjection de gouttelettes (82) pour éjecter des gouttelettes de lubrifiant en direction d'un palier de roulement (64) du système de paliers, l'unité d'éjection (82) comprenant une chambre (104) à lubrifiant, un gicleur (124) en communication fluidique avec la chambre (104), un actionneur électrique (102), et un contrôleur (140) destiné à appliquer des signaux électriques à l'actionneur (102) pour déclencher l'éjection de gouttelettes de lubrifiant depuis la chambre (104), via le gicleur (124), sur le palier (64), ***caractérisée en ce que*** l'actionneur (102) de ladite pompe à vide (50) est apte à modifier le volume de la chambre (104) pour de cette façon produire l'éjection de gouttelettes de celle-ci.

2. Pompe à vide selon la revendication 1, dans laquelle l'actionneur (102) est actionnable plusieurs fois en fonction des signaux électriques pour, de cette façon, éjecter un nombre correspondant de gouttelettes de lubrifiant.

3. Pompe à vide selon l'une quelconque de revendications précédentes, dans lequel l'actionneur (102) est élastiquement déformable en lui appliquant un signal électrique pour éjecter du lubrifiant de la chambre (104).

4. Pompe à vide selon la revendication 3, dans lequel l'actionneur (102) est un actionneur piézoélectrique.

5. Pompe à vide selon la revendication 4, dans lequel l'actionneur piézoélectrique (102) comprend une partie au moins d'une paroi piézoélectrique entourant la chambre (104).

6. Pompe à vide selon la revendication 5, dans lequel la chambre (104) est de section transversale rectangulaire ayant des parois supérieure et de base opposées (100) et des parois latérales opposées (102), l'une des parois latérales fournissant la paroi piézoélectrique.

7. Pompe à vide selon l'une quelconque des revendications précédentes, dans laquelle le contrôleur est configuré pour faire varier le rythme selon lequel les signaux électriques sont appliqués à l'actionneur (102) afin de modifier le rythme d'éjection des gouttelettes hors de l'unité d'éjection (82).

8. Pompe à vide selon l'une quelconque des revendications précédentes, dans laquelle le contrôleur (140) est configuré pour ajuster la forme d'onde des signaux électriques appliqués à l'actionneur.

9. Pompe à vide selon la revendication 8, dans laquelle le contrôleur (140) est configuré pour ajuster la forme d'onde des signaux électriques appliqués à l'actionneur (102) en fonction d'au moins un paramètre de fonctionnement de la pompe (50).

10. Pompe à vide selon l'une quelconque des revendications précédentes, dans laquelle le contrôleur est configuré pour ajuster la grandeur et/ou la durée des signaux électriques appliqués à l'actionneur.

11. Pompe à vide selon l'une quelconque des revendications précédentes, comprenant une alimentation (84) en lubrifiant destinée à fournir du lubrifiant à la chambre (104) pour le réapprovisionnement des gouttelettes éjectées de la chambre (104).

12. Pompe à vide selon la revendication 11, dans laquelle l'alimentation (84) en lubrifiant est configurée pour collecter le lubrifiant évacué du palier (64).

13. Pompe à vide selon l'une quelconque des revendications précédentes, comprenant des moyens pour empêcher le lubrifiant évacué du palier (64) de migrer vers un mécanisme de pompage de la pompe à vide.

14. Pompe à vide selon l'une quelconque des revendications précédentes, dans laquelle l'unité d'éjection (82) comprend une pluralité de chambres (104) à lubrifiant et, pour chaque chambre (104), un gicleur (124) en communication fluidique avec cette chambre (104), et un actionneur électrique (102), le contrôleur (140) étant configuré pour appliquer des signaux électriques aux actionneurs (102) afin de déclencher l'éjection de gouttelettes de lubrifiant depuis les chambres (104), via les gicleurs (124).

15. Pompe à vide selon l'une quelconque des revendications précédentes, comprenant une pluralité desdites unités d'éjection (82) destinées chacune à éjecter des gouttelettes de lubrifiant en direction du palier (64).

16. Pompe à vide selon l'une quelconque des revendications précédentes, adoptant la forme d'une pompe à vide turbomoléculaire (50).

17. Procédé de lubrification d'un palier de roulement (64) d'une pompe à vide (50), le procédé comprenant les étapes consistant à fournir une unité (82) d'éjection de gouttelettes destinée à éjecter des gouttelettes de lubrifiant en direction du palier (64), l'unité d'éjection (82) comprenant une chambre (104) à lubrifiant, un gicleur (124) en communication fluidique avec la chambre (104), et un actionneur électrique (102), à fournir du lubrifiant à la chambre (104), et à appliquer des signaux électriques à l'actionneur (102) pour déclencher l'éjection de gouttelettes de lubrifiant depuis la chambre (104), via le gicleur (124), sur le palier (64), et ***caractérisé en ce qu*'**on fait varier le volume de la chambre (104) pour déclencher l'éjection de gouttelettes de celle-ci.

18. Procédé selon la revendication 17, dans lequel l'actionneur (102) est actionné plusieurs fois en fonction des signaux électriques pour éjecter un nombre correspondant de gouttelettes de lubrifiant.

19. Procédé selon l'une quelconque des revendications 17 à 18, dans lequel l'actionneur (102) est déformé en lui appliquant un signal électrique afin d'éjecter du lubrifiant de la chambre (104).

20. Procédé selon la revendication 19, dans lequel l'actionneur (102) est un actionneur piézoélectrique (102).

21. Procédé selon la revendication 20, dans lequel l'actionneur piézoélectrique (102) comprend une partie au moins d'une paroi piézoélectrique (110, 114, 116, 112) entourant la chambre (104).

22. Procédé selon la revendication 21, dans lequel la chambre (104) est de section transversale rectangulaire ayant des parois supérieure et de base opposées (100, 118) et des parois latérales opposées (102), l'une des parois latérales (102) fournissant la paroi piézoélectrique.

23. Procédé selon l'une quelconque des revendications 17 à 22, dans lequel on modifie le rythme auquel les signaux électriques sont appliqués à l'actionneur (102) afin de modifier le rythme d'éjection des gouttelettes de l'unité d'éjection (82).
